# EUROPEAN PATENT SPECIFICATION

(11) **EP 0 976 241 B1**
(45) Date of publication and mention of the grant of the patent: **16.04.2003**
(21) Application number: 99900113.4
(22) Date of filing: 21.01.1999
(51) Int. Cl.: H04N 1/32

(54) **PLAIN-PAPER FACSIMILE APPARATUS WITHOUT PAGE MEMORY, FOR RECEIVING IMAGE DATA OF AT LEAST TWO DOCUMENTS TO BE REPRODUCED**
NORMALPAPIERFAKSIMILEGERÄT OHNE SEITENSPEICHER ZUM EMPFANG VON BILDDATEN VON WENIGSTENS ZWEI ZU REPRODUZIERENDEN DOKUMENTEN
APPAREIL DE FAC-SIMILE POUR PAPIER NU, SANS MEMOIRE DE PAGES, POUR LA RECEPTION DE DONNEES D'IMAGES D'AU MOINS DEUX DOCUMENTS A REPRODUIRE

(30) Priority: 17.02.1998 EP 98890043
(43) Date of publication of application: 02.02.2000
(73) Proprietor: SAGEM SA, 75015 Paris (FR)
(72) Inventor: LOIDL, Martin, NL-5656 AA Eindhoven (NL)
(74) Representative: Bloch, Gérard
(86) International application number: IB9900091
(87) International publication number: WO99041901

(56) References cited:
- US-A- 4 963 988
- US-A- 5 491 565

## Description

The invention relates to a facsimile apparatus, in which sheets having a given sheet length can be printed with the received image data of documents to be reproduced and in which the means specified hereinafter have been provided, i.e. image data processing means which can receive and process received image data of a document to be reproduced, and printing means with the aid of which a sheet having a given sheet length can be printed with the received image data of a document to be reproduced, and drive means by which each time one sheet can be driven while the sheet is printed.

Such a facsimile apparatus of the type defined in the opening paragraph, which is often referred to as a plain-paper facsimile apparatus, has been known for a long time and has been commercially available in a multitude of variants for a long time.

In the known facsimile apparatus the image data processing means include a so-called page memory which can store the received image data of at least one document which has been scanned in a transmission facsimile apparatus and which is to be reproduced by a printing process in the known facsimile apparatus. Such a page memory can also perform a so-called buffer function, which is necessary if during a transmission process of at least two documents to be reproduced, after the image data of a document have been received and afte a sheet has been printed in accordance with said received image data, firstly, the printed sheet of a given sheet length, which corresponds for example to the length of an A4 format sheet, is printed over a printing length above an upper threshold value but not over the entire sheet length and, secondly, subsequent thereto the image data of a following document to be received and to be reproduced should be printed out. In such case the partly printed sheet should first be moved away from the printing means and ejected from the known facsimile apparatus and after this a following sheet should be fed into the known facsimile apparatus up to the printing means, which requires a comparatively long time, which can be distinctly longer than a transmission pause, observed between the transmission of image data of two documents to be scanned and reproduced consecutively, as defined in known manner in for example a standardized transmission protocol, for example in accordance with the international standards designated ITU-T Recommendation T.4 and ITU-T Recommendation T.30. However, such a page memory as mentioned above should have a comparatively high storage capacity, as a result of which only a comparatively expensive memory can be used for such a page memory, which entails a comparatively high cost and makes the known facsimile apparatus more expensive. US-A-5 491 565 discloses the variation of the transmission rate of facsimile data in a telecommunication system.

It is an object of the invention to avoid the afore-mentioned problems with a facsimile apparatus of the type defined in the opening paragraph and to provide an improved facsimile apparatus.

According to the invention, in order to achieve the afore-mentioned object in a facsimile apparatus of the type defined in the opening paragraph, activable delay means have been provided, by which during a transmission process of at least two documents to be reproduced after such a sheet has been printed over a printing length above an upper threshold value but not over the entire sheet length in accordance with the received image data of a document to be reproduced by this printing and before a subsequent reception of image data of a following document to be reproduced - the subsequent reception of the image data of the following document to be reproduced can be delayed.

The measures in accordance with the invention guarantee in a simple and inexpensive manner that during a consecutive reception and print-out of image data of two documents to be reproduced consecutively as part of a transmission process, in which after the transmission of the image data of the first document a sheet of a given sheet length is printed only partly, the subsequent reception of the image data of the next document is delayed in such a manner that owing to this delay the previous partly printed sheet can be ejected from the facsimile apparatus in accordance with the invention and the next sheet to be printed can be fed to the printing means without the subsequently received image data of the next document to be reproduced having to be stored temporarily in a page memory for buffer purposes. Thus, a facsimile apparatus in accordance with the invention does not require a page memory, which is advantageous for a simple and low-cost construction of a facsimile apparatus in accordance with the invention. It is to be noted that delaying a subsequent reception of the image data of a following document to be reproduced can be accomplished by different means and in different manners, as will be set forth in more detail hereinafter.

In a facsimile apparatus in accordance with the invention having the characteristic features defined in the independent Claim 1, it has proved to be particularly advantageous if the measures defined in the dependent Claim 2 are taken. Such an embodiment can be realized particularly simply and further has the advantage that it can be realized simply by means of a microcomputer, which is favorably used anyway in such an apparatus.

In a facsimile apparatus in accordance with the invention having the characteristic features defined in the dependent Claim 2, it has proved to be very advantageous if, in addition, the measures defined in the dependent Claim 3 are taken. Thus, it is achieved in a simple manner that if printing out of the received image data of a document already reproduced requires only a very short printing length the image data of the next document to be reproduced is printed out on the same sheet on which the image data of the very short previously reproduced document has been printed. In practice, this has proved to be very advantageous because it precludes an unnecessary paper consumption.

In a facsimile apparatus in accordance with the invention having the characteristic features defined in the independent Claim 1, it has further proved to be very advantageous if, in addition, the measures defined in the dependent Claim 4 are taken. This has the great advantage that the training mode request means, which are present anyway in a facsimile apparatus, are used in addition as activable delay means. The use of the training mode request means as activable delay means further has the advantage that, as a result of this, the subsequent reception of the image data of a following document to be reproduced is delayed in such a manner that already the beginning of the reception and subsequently the following transmission and reception of the image data of a following document to be reproduced can be delayed by a given delay time.

However, in a facsimile apparatus in accordance with the invention having the characteristic features defined in the independent Claim 1, it has also proved to be very advantageous if, in addition, the measures defined in the dependent Claim 5 are taken. This has the advantage that the print line duration announcing means, which are present anyway, are used in addition as activable delay means. Using the print line duration announcing means in addition as activable delay means further has the advantage that in this way the subsequent reception of the image data of a following document to be reproduced is delayed in such a manner that the beginning of the reception is hardly delayed but that the pixel line by pixel line transmission and reception of image data of a following document to be reproduced is delayed in that with the aid of the print line duration announcing means a longer print line duration for the pixel line by pixel line transmission is reported to a transmitting facsimile apparatus than is actually required for the facsimile apparatus in accordance with the invention.

The afore-mentioned aspects as well as further aspects of the invention will be apparent from the embodiments described hereinafter by way of examples and will be elucidated with reference to these embodiments.

The invention will now be described in more detail with reference to two embodiments shown in the drawings and given by way of examples, but to which the invention is not limited.

Figure 1 is a diagrammatic representation, for the greater part in the form of a block diagram, which shows a facsimile apparatus in accordance with a first embodiment of the invention, in which the activable delay means are formed by training mode request means.

Figure 2 shows, in a representation similar to Figure 1, a facsimile apparatus in accordance with a second embodiment of the invention, in which the activable delay means are formed by print line duration announcing means.

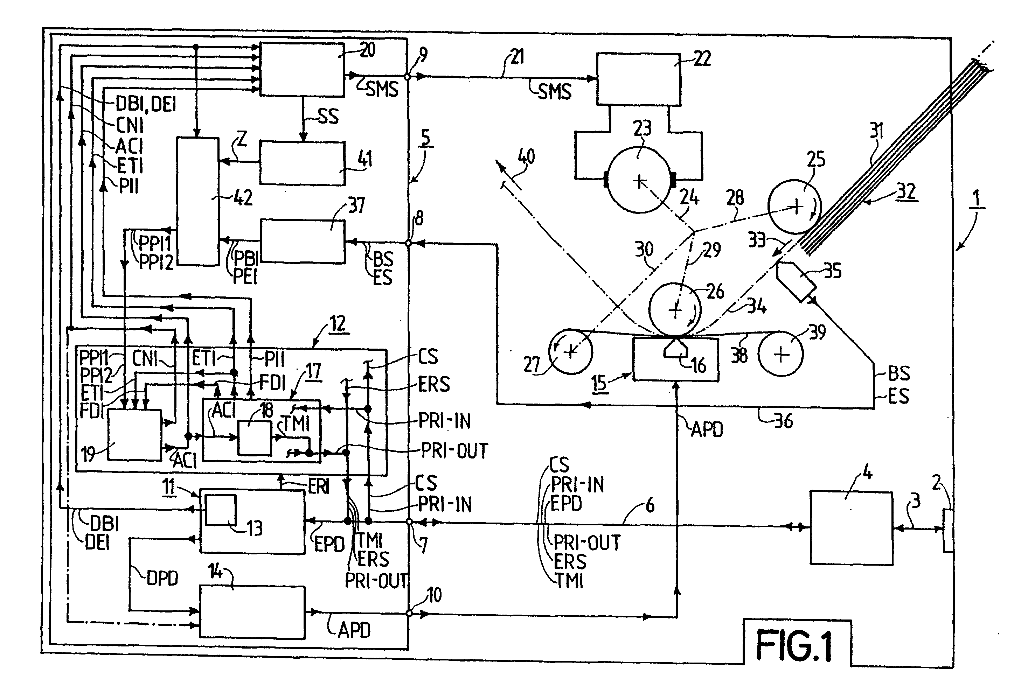

Figure 1 shows a facsimile apparatus 1 in a first embodiment of the invention, which is constructed as a so-called plain-paper facsimile apparatus and which is referred to hereinafter as the apparatus 1. The apparatus 1 has connector means 2 via which the apparatus 1 can be connected to a telephone network. A connection 3 connects the connector means 2 to telephone interface means 4. Communication between the connector means 2 and a microcomputer 5 of the apparatus 1 is possible via the telephone interface means 4, a connection 6 being provided between the telephone interface means 4 and the microcomputer 5 and being connected to connector means 7 of the microcomputer. As regards the microcomputer 5 and its outputs and inputs it is to be noted that, in addition to the connector means 7, the microcomputer 5 also comprises input means 8, output means 9 and print data output means 10.

With the aid of the microcomputer 5 several means are realized and a multitude of functions and measures can be carried out. Of the possibilities that can be realized by means of the microcomputer 5 only those possibilities which are relevant and of interest in the present case are described in more detail hereinafter.

With the aid of the microcomputer 5 image data processing means 11 are realized. The image data processing means 11 mainly serve for decoding received and coded image data EPD, which can be applied from the connector means 7 to the image data processing means 11. The image data processing means 11 test the received and decoded image data EPD for the presence of errors or too many errors in the received image data. If the received image data EPD actually contain too many errors, the image data processing means 11 supply error information ERI, which information is applied to control data processing means 12, which will be described in more detail hereinafter.

The image data processing means 11 include detection means 13 for detecting the beginning of received image data EPD of a document to be reproduced and for detecting the end of received image data EPD of a document to be reproduced. When the detection means 13 detect the beginning of image data EPD of a document, they supply beginning of data information EBI. When the detection means 13 detect the end of image data EPD of a document, they supply end of data information EBI.

Received image data DPD decoded by the image data processing means 11 can be applied to print data control means 14, which are also formed by means of the microcomputer 5. The print data control means 14 serve for preparing the decoded image data DPD. After such a preparation of decoded image data DPD the print data control means 14 supply prepared image data. The prepared image data APD can be applied to printing means 15 via the print data output means 10, which comprise a strip-shaped printing head 16 by means of which the prepared image data APD and, consequently, the received image data EPD can be printed in a pixel line by pixel line fashion.

As already stated, the microcomputer 5 also forms control data processing means 12. The control data processing means 12 include protocol information processing means 17. In addition to a plurality of other means, not shown, the protocol telephone interface means information processing means also include training mode request means 18. In the present case, the control data processing means 12 advantageously also include logic means 19, which will be described in more detail hereinafter.

The control data processing means 12 serve for detecting a ringing signal CS, which can be applied from the telephone interface means 4 to the microcomputer 5, i.e. to the control data processing means 12, via the connector means 7.

The control data processing means 12 further serve for processing the error information ERI which can be generated by the image data processing means 11. When the image data processing means 11 supplies such error information ERI to the control data processing means 12 the protocol information processing means 17 of the control data processing means 12 generate an error indication signal ERS, which can be applied to the telephone interface means 4 via the connector means 7, after which this error indication signal ERS can be transferred to a transmitting facsimile apparatus which is in communication with the apparatus 1 in order to be processed in this transmitting facsimile apparatus.

The protocol information processing means 17 serve for processing protocol information. In this respect, it is to be borne in mind that the communication between two facsimile apparatuses which communicate with one another always proceeds in compliance with a given standard protocol. Such a standard protocol defines a multitude of protocol steps, each defined by given protocol information which can be processed with the aid of protocol processing means 17. Herein, processing is to be understood to means both the reception of incoming protocol information PRI-IN and the generation of outgoing protocol information PRI-OUT. Incoming protocol information PRI-IN is applied from the telephone interface means 4 to the protocol information processing means 17 via the connection 6 and the connector means 7. Likewise, protocol information PRI-OUT to be supplied and transmitted and generated by the protocol information processing means 17 is applied to the telephone interface means 4 via the connector means 7 and the connection 6 in order to be transmitted by a transmitting facsimile apparatus.

The protocol information processing means 17 can generate first control information PII if in the process of a communication between the apparatus 1 and a transmitting facsimile apparatus in accordance with a protocol step of a protocol the protocol information processing means 17 detect that the image data of a document to be reproduced should be printed out and that therefore a sheet of paper should be fed into the apparatus 1 and should be moved into a printing start position.

The protocol information processing means 17 can further generate second control information ETI when the protocol information processing means 17 detect that the end of a transmission of image data of all the documents to be reproduced in transmission process is reached, so that the sheet 31 printed last should be ejected from the apparatus 1 and, moreover, the logic means 19 should be reset to an initial state.

The protocol information processing means 17 can further generate discerning information FDI when the protocol information processing means 17 detect that subsequently, after completion of the reception of image data of a document already received, image data a following document to be reproduced should be received. The discerning information FDI generated by the protocol information processing means 17 can be processed by the logic means 19, as will be described in more detail hereinafter.

The training mode request means 18 included in the protocol information processing means 17 can generate training mode request information TMI. Such training mode request information TMI can be applied to the telephone interface means 4 via the connector means 7 and the connection 7 and can be transmitted from the telephone interface means 4 to a transmitting facsimile apparatus which is in communication with the apparatus 1. By means of the training mode request information TMI the transmitting facsimile apparatus can be set to a training mode. In such a training mode the transmitting facsimile apparatus transmits a given bit pattern to the receiving apparatus 1, after which the apparatus 1 tests the received bit pattern in order to ascertain whether the received bit pattern is error free. In the case of error free reception the training mode is terminated. However, if an erroneous reception is detected the given bit pattern is transmitted once more by the transmitting facsimile apparatus, either with the same transmission rate or with a lower transmission rate, after which another test for error-free reception is carried out. If again an erroneous reception is detected, the given bit pattern is transmitted again, preferably at a reduced transmission rate. It is apparent that such a training mode requires a minimum training time. The present apparatus 1 makes advantageous use of this fact, as will be explained hereinafter.

The microcomputer 5 also forms stepping motor control means 20. The stepping motor control means 20 can generate stepping motor control signals SMS, which can be applied to stepping motor supply means 22 via the output means 9 and a connection 21. The stepping motor supply means 22 can power a stepping motor 23 so as to drive the motor shaft 24 of the stepping motor 23 in controlled steps.

The stepping motor 23 serves to drive a paper draw-in roller 25, a paper feed roller 26 and a take-up roller 27 in a step-by-step fashion. This driving is effected via three drive transmissions 28, 29 and 30, which can be driven by the motor shaft 24 and which, similarly to the motor shaft 24, are only represented diagrammatically in dash-dot lines.

The paper draw-in roller 25 serves to remove the upper sheet 31 from a stack 32 of sheets. The removal of the upper sheet 31 from the stack 32, which can also be referred to as drawing the sheet 31 into the apparatus 1, is effected in a direction indicated by an arrow 33 along a paper path 34, which is also indicated by a dash-dot line in Figure 1. A paper detection sensor 35 is arranged in the paper path 34 to enable the beginning of a sheet 31 and the end of a sheet 31 to be detected. When the beginning of a sheet 31 is detected the paper detection sensor 35 can generate a beginning signal BS and when the end of a sheet 31 is detected it can generate an end signal ES. Both the beginning signal BS and the end signal ES are applied from the paper detection sensor 35 to the input means 8 of the microcomputer 5 via a connection 36 and are processed by paper detection means 37 in the microcomputer 5 in such a manner that the paper detection means generate beginning of paper information PBI upon the detection of the beginning of a sheet 31 and end of paper information PEI upon detection of the end of a sheet 31.

A sheet 31 which is drawn from the stack 32 into the apparatus 1 is fed to the printing means 15, i.e. to the printing head 16, along the paper path 34, which is arcuate, each sheet 31 engaging with the paper feed roller 26, as a result of which the sheet 31 can be driven in steps by means of the paper feed roller 26, i.e. in steps corresponding to pixel lines.

In the apparatus 1 a sheet 31 fed between the paper feed roller 26 and the printing head 16 also enters into engagement with a thermo-transfer foil 38 interposed between the sheet 31 and the printing head 16, which foil is also driven while the sheet 31 is driven stepwise and is thus unwound from a supply roller 39 and wound onto the take-up roller 27, which is driven by means of the stepping motor 23. The sheet 31 can thus be printed in accordance with the received image data EPD of a document to be reproduced by heating of the printing elements of the printing head 16 in a pixel-by-pixel fashion, as a result of whose the thermo-transfer foil 38 is heated in a pixel-by-pixel fashion and, as a result of this, a dye contained in the thermo-transfer foil is transferred to the sheet 31 in a pixel-by-pixel fashion. During printing of a sheet 31 the sheet 31 is advanced along an arcuate path after it has moved past the printing head 16, so that eventually a printed sheet 31 can be ejected from the apparatus 1 along the paper path 34 indicated by the arrow 40.

As regards the stepping motor control means 20 it is to be noted that the stepping motor control means 20 supply a step signal SS which corresponds to each step of the stepping motor 23 and which is processed with the aid of step counting means 41. The step counting means 41 count the number of step signals SS applied to them, so that the instantaneous count Z in the step counting means 41 is representative of a given paper feed.

The microcomputer 5 further forms paper position detection means 42. The paper position detection means 42 cooperate with the step counting means 41 and with the paper detection means 37. The paper position detection means 42 can process the beginning of paper information PBI and the end of paper information PEI, which can be generated by the paper detection means 37, and the count Z, which can be determined by the step counting means 41. As a result of this processing, the paper position detection means 42 are capable of detecting the condition that a sheet 31 of a given sheet length is printed in accordance with the received image data EPD of a reproduced document over a printing length above an upper threshold value but not over the entire sheet length, the paper position detection means 42 being capable of generating second detection information PPI2 when this condition is detected.

Depending on the operating conditions the paper position detection means 42 generate either first detection information PPI1 or second detection information PPI2. Said detection information PPI1 or PPI2 is processed by the logic means 19, i.e. when the logic means 19 in addition receives the discerning information FDI which can be generated by the protocol information processing means 17. The logic means 19 are designed in such a manner that if the first detection information PPI1 and the discerning information FDI appear the logic means 18 can generate activation information ACI. This activation information ACI can be applied to the training mode request means 18, as a result of which the training mode request means 18 of the apparatus 1 can be activated by means of the activation information ACI. In the present case, in which at least two documents to be reproduced are transmitted, the training mode request means 18, after a sheet 31 has been printed with the received image data EPD of a reproduced document over a printing length above an upper threshold value but not over the entire sheet length, i.e. not to the full extent, and before a subsequent reception of image data of a following document to be reproduced - the subsequent reception of the image data of the next document to be reproduced can be delayed simply by the activation of a training mode which is, in itself, not necessary. By the activation of the training mode request means 18 with the aid of the activation information ACI a training mode, which is in itself is not necessary at this instant, is activated and is utilized in an advantageous manner to delay the subsequent reception of the image data of the next document to be reproduced by a given delay time so as to allow a previously partly printed sheet to be ejected and a subsequently a following sheet to be fed into a printing start position during this delay time.

As regards the logic means 19 it is to be noted further that the logic means 19 are designed in such a manner that when the second detection information PPI2 and the discerning information FDI they do not generate the activation information ACI for the activation of the delay means formed by the training mode request means 18 but instead generate third control information CNI which can be applied to the stepping motor control means 20 and which causes a sheet printed over only a very small printing length to be advanced, for example by one one centimeter, in order to guarantee a safety margin between the previously printed area of a sheet 31 and the subsequent printing area of a sheet 31. If desired, the third control information CNI can also be applied to the print data control means 14, as indicated by a dash-dot line in Figure 1, in order to achieve with the aid of the print data control means 14 that, for example, a separating line is printed after the small previously printed area of a sheet 31.

Hereinafter, the operation of the apparatus 1 will be described, but only those functions and function steps which are relevant here will be dealt with.

To begin with, it is to be noted once again that the apparatus 1 shown in Figure 1 communicates with a transmitting facsimile apparatus in compliance with a given standard protocol which defines a pause between the transmission of image data of two documents to be scanned consecutively in the transmitting facsimile apparatus and to be reproduced consecutively in the apparatus 1, which pause can have different lengths but is generally of the order of magnitude of approximately 3 seconds.

The operation of the apparatus 1 will be described hereinafter in twenty-two (22) function steps:
1. It is assumed that a transmitting facsimile apparatus calls the apparatus 1 shown in Figure 1 and thus a ringing signal CS is transmitted to the apparatus 1.
2. Such an incoming ringing signal CS is detected by the control data processing means 12, as a result of which the apparatus 1 is activated and answers the transmitting facsimile apparatus, but this will not discussed here.
3. Subsequently, a desired transmission of the image data of at least one document from the transmitting facsimile apparatus to the apparatus 1 shown in Figure 1 is initialized. During this initialization some test operations are performed in order to guarantee a correct transmission. This includes the activation of a training mode prescribed by the protocol, which is effected in the customary manner by the transmitting facsimile apparatus. In response to this, the prescribed training mode is carried out.
4. During the execution of the afore-mentioned standard protocol the protocol information processing means 17 further generates the first control information PII and supplies it to the stepping motor control means 20, as a result of which the stepping motor 23 is driven in such a manner, via the stepping motor control means, that the next sheet 31 which is available is drawn in the direction indicated by the arrow 33 until the sheet 31 has reached a printing start position in which the sheet 31 is in a given starting position with respect to the priming head 16. During the feed-in of the sheet 31 the beginning of sheet is detected by means of the paper detection sensor 35, which in response thereto supplies a beginning signal BS to the paper detection means 37, which thereupon supply beginning of paper information PBI to the paper position detection means 42. In addition, the stepping motor control means 20 supply step signals SS corresponding to the number of steps performed by the stepping motor 23 to the step counting means 41, which in response thereto supply a given count Z to the paper position detection means 42 when the sheet 31 that is fed in has reached the printing start position.
5. Subsequently, coded image data EPD are transmitted to the apparatus 1, which are then decoded with the aid of the image data processing means 11, the decoded image data DPD being transferred to the printing data control means 14, as a result of which prepared image data APD are applied to the printing means 15 via the printing data output means 10 of the microcomputer 5, thus enabling the printing head 16 to effect printing in accordance with the received coded image data EPD. As soon as the image data processing means 11 receive image data to be processed, the image data beginning is detected by means of the detection means 13, in response to which the detection means 13 generate the data beginning information DBI and transfer this information to the stepping motor control means 20, as a result of which the stepping motor is started at the image data beginning, in order to drive the sheet 31, which has previously been brought into the printing start position, in steps corresponding to pixel lines, upon which the printing head 16 starts to print on the sheet 31. The data beginning information DBI is also applied to the paper position detection means 42 but does not produce any response in the paper position detection means 42.
6. Subsequently, the sheet 31 is printed in accordance with the received image data EPD, the sheet 31 being advanced in steps corresponding to pixel lines. The stepping motor control means 20 then supply step signals SS to the step counting means 41, so that the count Z is always representative of the instantaneous paper feed.
7. As soon as the end of the received image data EPD of a document to be reproduced is reached, this is detected with the aid of the detection means 13, as a result of which the detection means 13 generate image data end information DEI. The image data end information DEI is transferred to the stepping motor control means 20, which causes the stepping motor 23 to be stopped and, consequently, the printing process to be terminated. The image data end information DEI is also transferred to the paper position detection means 42, as a result of which the instantaneously reached paper position is determined by means of the paper position detection means 42 on the basis of the count Z applied to it by the step counting means 41, which position obviously corresponds to the actually reached printing length and, accordingly, first detection information PPI1 is produced. It is assumed that a sheet 31 is printed over, for example, 25 cm, which means that the printing length is 25 cm.
8. Now a pause occurs after the complete reproduction of the document to be reproduced in accordance with the standard protocol. In this pause it is checked whether the preceding transmission of image data has proceeded correctly, i.e. essentially error-free. If this is not the case, the image data processing means 11 supply error information ERI to the control data processing means 12, after which the control data processing means 12 generate an error indication signal ERS, which is transferred to the transmitting facsimile apparatus via the telephone interface means 4 for the purpose of error indication. Conversely, if the transmission of the image data of the previously reproduced document has been completed in an essentially error-free manner, the transmission of the image data of a following document to be reproduced is initialized.
9. If there is no following document to be scanned and to be reproduced, the transmitting facsimile apparatus supplies corresponding control information to the apparatus 1 and to the control data processing means 12 and the protocol information processing means 17 included in the last-mentioned means. In response to this control information the protocol information processing means 17 generate the second control information ETI, which is applied both to the logic means 9 and to the stepping motor control means 20. In the logic means 19 the second control information ETI causes the logic means 19 to be reset. In response to the second control information ETI the stepping motor control means 20 cause the stepping motor 23 to be driven in such a manner that the previously printed sheet 31 is ejected from the apparatus 1.
10. However, if there is a following document to be scanned and to be reproduced in the transmitting facsimile apparatus the transmitting facsimile apparatus transmits corresponding control information to the apparatus 1. This control information is processed with the aid of the protocol information processing means 17, after which the protocol information processing means 17 generate the discerning information FDI and deliver it to the logic means 19.
11. The logic means 19 thus detect that they have received discerning information FDI. In this case, the logic means 19 take over first detection information PPI1 previously formed and available in the paper position detection means 42, which information is representative of the actual paper position of the previously printed sheet 31. As a result, the logic means 19 have received information which indicates that the previously printed sheet 31 has been printed over a given printing length, namely 25 cm, and that a following sheet 31 is to be printed and that the ejection of the previously printed sheet 31 and the feed-in of the next sheet 31 takes longer than the previously started pause in accordance with the protocol, which pause has a length of approximately 3 seconds.
   As a result of the information in said logic means 19, the logic means 19 generate and supply the activation information ACI, both to the stepping motor control means 20 and to the training mode request means 18.
   In the training mode control means 20 the activation information ACI causes the stepping motor control means 20 to drive the stepping motor 23 in such a manner that the previously printed sheet 31 is ejected from the apparatus 1 in the direction indicated by the arrow 40 and that the next sheet 31 to be printed is fed in the direction indicated by the arrow 33, namely into the afore-mentioned printing start position.
   Applying the activation ACI from the logic means 19 to training mode request means 18 the advantage is obtained that the training mode request means 18 are activated and transmit training mode request information TMI to the transmitting facsimile apparatus which communicates with the apparatus 1 and thereby request the transmitting facsimile apparatus to change over to a training mode.
   Subsequently, this training mode is therefore carried out, which continues until in the meantime the previously printed sheet 31 is ejected and the next sheet 31 to be printed is fed in and brought into the printing start position. Thus, the pause dictated by the transmission protocol is intentionally used to prolong the training mode, as result of which the transmission of the image data of the next document to be reproduced is delayed owing to the prolongation of the pause by the duration of the training mode.
12. Upon termination of the training mode the transmitting facsimile apparatus begins to transmit the image data EPD of the next document to be reproduced. Said image data EPD are again processed with the aid of the image data processing means 11, the beginning of the image data EPD of the next document to be reproduced, which data are transmitted to the apparatus 1, being detected by the detection means 13, which in response thereto supply the image data beginning information DBI to the stepping motor control means 20, as a result of which the stepping motor 23 is started and subsequently a printing process in accordance with the received image data EPD by means of the printing head 16 is started.
13. Subsequently, the processes already described under point 6 are performed.
14. Subsequently, the processes already described under point 7 are performed.
   However, it is now assumed that for the next sheet 31 only a printing length of 4 cm is required.
15. Subsequently, the processes already described under point 8 are performed.
16. Subsequently, the processes already described under point 9 are performed.
17. Subsequently, the processes already described under point 10 are performed.
18. Subsequently, the processes already described under point 11 are performed.
   However, in the present case the logic means 19, which have previously received the second detection information PPI2, information is available that the sheet 31 just printed has been printed over only 4 cm. Owing to this information the logic means 19 do not supply activation information ACI. However, instead the logic means 19 supply the third control information CNI, which is applied to the stepping motor control means 20 and, if applicable, also to the printing data control means 14.
19. In response to the third control information CNI the stepping motor control means 20 cause the stepping motor 23 to advance the sheet 31, which has previously been printed over a small printing length of only 4 cm, over only a short distance of, for example only 1 cm or 2 cm. Advancing a sheet 31 over such a short distance is readily possible within the previously started pause in accordance with the standard protocol.
20. After expiry of the previously started pause in accordance with the standard protocol the image data of the next document to be reproduced are transmitted, as a result of which printing out is effected on that sheet 31 which has already been printed over a length of approximately 4 cm during the transmission of image data before the pause which has just finished. Depending on the length of the document to be reproduced, the present printing process can be completed on this one sheet 31 or, if the document to be reproduced is longer, it can be continued on a further sheet 31.
21. It is assumed that after the previous printing process, i.e. after the reproduction of the document to be reproduced, no further document is to be reproduced. In that case the transmitting facsimile apparatus which communicates with the apparatus 1 supplies appropriate control information to the apparatus 1, which information is received and processed by the protocol information processing means 17. As a result of this, the protocol information processing means 17 generate the second control information ETI. The second c control information ETI is applied to the logic means 19 and the stepping motor control means 20. In the logic means 10 the second control information ETI causes the logic means 19 to be reset to the neutral initial state. In the stepping motor control means 20 the second control information ETI causes the stepping motor 23 to be driven in such a manner that the sheet 31 printed last is ejected from the apparatus 1.
22. After the sheet 31 printed last has been ejected from the apparatus 1 the previously carried out transmission process of, in total, two documents to be reproduced is terminated. Therefore, the apparatus 1 is subsequently set to a standby state, in a manner not shown, as is customary for facsimile apparatuses, for which reason this is not described here any further.

Owing to the use of the training mode request means 18 as activable delay means in the apparatus 1 shown in Figure 1 it is achieved in a simple manner that a subsequent reception of image data of a following document to be reproduced can be delayed reliably until a sheet 31 which has previously been printed over its whole printing length is ejected from the apparatus 1 and a following sheet 31 to be printed can be brought into a printing start position. Owing to the use of the training mode request means 18 as activable delay means the apparatus 1 shown in Figure 1 does not require a separate page memory for buffer purposes, as is needed for such buffer purposes in known plain-paper facsimile apparatuses.

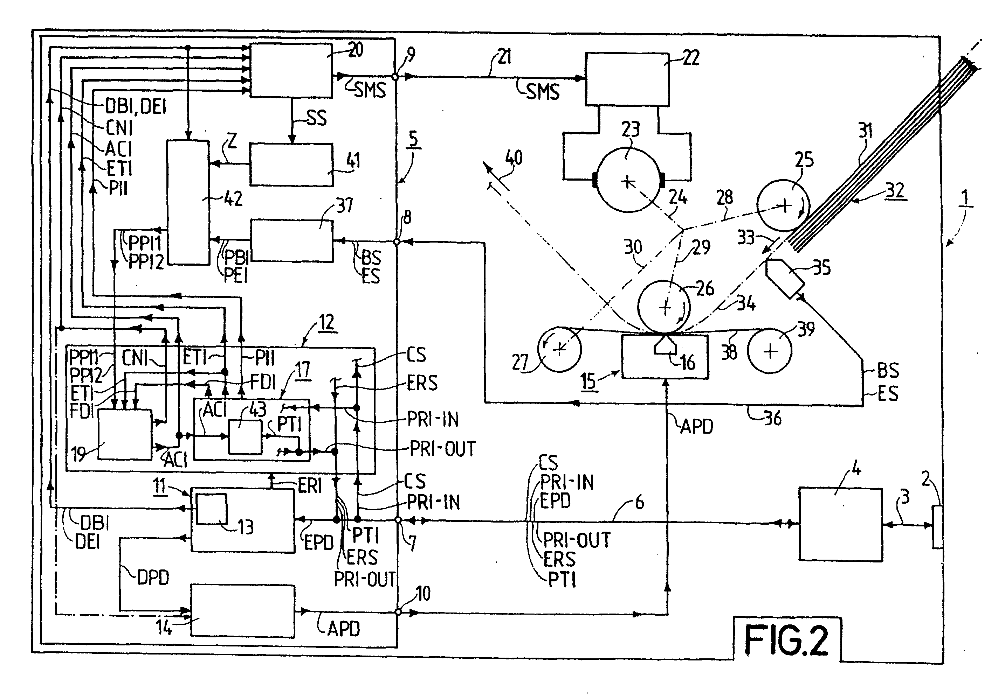

Figure 2 shows a facsimile apparatus 1 in accordance with a second embodiment of the invention, which also referred to hereinafter as the apparatus 1. The apparatus 1 shown in Figure 2 is largely of the same construction as the apparatus 1 shown in Figure 1. However, an essential difference resides in the construction of the activable delay means by which the subsequent reception of the image data of a following document to be reproduced can be delayed.

In the apparatus 1 shown in Figure 2 the activable delay means are formed by print line duration announcing means 43 included in the protocol information processing means 17. The print line duration announcing means 43 can generate print line duration information PTI, which can assume different values, which values each represent a print line duration. A print line duration is to be understood to mean the length of time required by the printing means 15, i.e. by the printing head 16, for printing one pixel line.

The print line duration information PTI can be applied from the print line duration announcing means 43 to the telephone interface means 4 via the connection 6 and from said telephone interface means to a transmitting facsimile apparatus via the connector means 2. In the transmitting facsimile apparatus the instantaneous print line duration information PTI causes the transmitting facsimile apparatus to transmit each pixel line obtained by scanning a document to the apparatus 1 with a print line duration corresponding to the print line duration telephone information PTI. In normal operation the apparatus 1 informs a transmitting facsimile apparatus with the aid of print line duration information PTI with which the print line duration the printing head 16 of the printing means 15 can print out a pixel line.

In the present apparatus 1 shown in Figure 2 the print line duration announcing means 43 can advantageously also be used as activable delay means by which the subsequent reception of the image data of a following document to be reproduced can be delayed. The print line duration announcing means 43 are used as activable delay means when the print line duration announcing means 43 receive activation information ACI from the logic means 19, which in the apparatus 1 shown in Figure 2 is generated by the logic means 19 under the same conditions and circumstances as in the apparatus 1 shown in Figure 1.

When the print line duration announcing means 43 receive such activation information ACI from the logic means 19 this causes the print line duration announcing means 43 to report to the transmitting facsimile apparatus which cooperates with the apparatus 1 a print line duration which longer than actually required for the apparatus 1, which is effected by means of the correspondingly selected print line duration information PTI. As a result of this, the relevant transmitting facsimile apparatus transmits each pixel line to the apparatus 1 for a longer print line duration than actually necessary for the apparatus 1. The pixel lines transmitted to the apparatus 1 with this longer print line duration are received in the image data processing means 11 and are buffered in storage means which are present anyway in said image data processing means 11 and which are in principle formed by the so-called main memory of the microcomputer 5, said buffering being effected until a sheet 31 which has previously not been printed over its whole printing length is ejected from the apparatus 1 and the following sheet 31 to be printed has been brought into a printing start position.

As soon as the next sheet 31 to be printed has reached its printing start position the pixel lines, which in the meantime have been received by the image data processing means 11 with a longer print line duration and which have been buffered in the storage means of the image data processing means 11, are read out of the storage means of the image data processing means 11 in accordance with the shorter print line duration which can actually be realized in the apparatus 1 - i.e. with a higher speed - and are applied to the printing data control means 14, so that as a result of this faster read-out of the buffered pixel lines the storage means of the image data processing means 11, which storage means are used for buffering, are cleared more and more although subsequently image data of further pixel lines transmitted by the transmitting facsimile apparatus with a longer print line duration are read in, which image data - as already stated - are transmitted with the longer print line duration from the transmitting facsimile apparatus to the apparatus 1 shown in Figure 2.

Thus, with the apparatus 1 in accordance with the invention shown in Figure 2 it is also achieved in a simple manner that, if required, image data of a following document to be reproduced can be delayed without a separate page memory being required for this delay, the desired goal being achieved with the aid of storage means which are present anyway in the image data processing means 11, which is advantageous because said storage means, which are present anyway, require a substantially smaller storage capacity than known page memories in known facsimile apparatuses.

## Claims

1. A facsimile apparatus (1),
in which sheets (31) having a given sheet length can be printed with the received image data of documents to be reproduced and comprising :
image data processing means (11), which can receive and process received image data of a document to be reproduced,
printing means (15), with the aid of which a sheet (31) having a given sheet length can be printed with the received image data of the document to be reproduced, and
drive means (26), by which each time one sheet (31) can be driven while the sheet (31) is printed,
apparatus **characterized in that** it further comprises
activable delay means (18 ; 43), by which, during a transmission process of at least two documents to be reproduced, after such a sheet (31) has been printed over a printing length above an upper threshold value but not over the entire sheet length, in accordance with the received image data of the document to be reproduced by this printing and before a subsequent reception of image data of a following document to be reproduced, the subsequent reception of the image data of the following document to be reproduced is delayed in case that the ejection of the sheet (31) which has been printed and the feeding of the following document takes longer then a previously started pause in accordance with a transmission protocol.

2. A facsimile apparatus (1) as claimed in claim 1, **characterized in that** it further comprises detection means (42) which are constructed to detect the condition that a sheet (31) having the given sheet length has been printed with the received image data of a reproduced document over a printing length above an upper threshold value but not over the entire sheet length, and by which first detection information (PPI1) can be generated when this condition is detected, and
discerning means (17) which are constructed to discern the condition that image data of a following document to be reproduced are to be received and printed, and which enable discerning information (FDI) to be generated when this condition is discerned, and logic means (19), which cooperate with the detection means (42) and the discerning means (17) and which can generate activation information (ACI) when the first detection information (PPI1) and the discerning information (FDI) are available, and the delay means (18 ; 43) in the facsimile apparatus (1) are activable by means of the activation information (ACI).

3. A facsimile apparatus (1) as claimed in claim 2, **characterized in that** the detection means (42) are constructed to detect the condition that a sheet (31) having the given sheet length has only been printed with the received image data of a reproduced document over a printing length below a lower threshold value, and
the detection means (42) can generate second detection information (PPI2) when this condition is detected, and
the logic means (19) are arranged for not generating the activation information (ACI) for the activation of the delay means (18 ; 43) when the second detection information (PPI2) and the discerning information (FDI) are available.

4. A facsimile apparatus (1) as claimed in claim 1, **characterized in that** the activable delay means (18) comprise training mode request means for using the pause dictated by the transmission protocol, hereby prolonging the training mode and delaying the reception of the image data of the following document.

5. A facsimile apparatus (1) as claimed in claim 1, **characterized in that** the activable delay means (43) comprise print line duration announcing means provided for informing a transmitting facsimile apparatus about a print line duration longer than required and thus for delaying the reception of the image data of the following document.

## Patentansprüche

1. Faxgerät (1), in dem Blätter (31) mit einer vorgegebenen Blattlänge mit den empfangenen Bilddaten von Dokumenten, die reproduziert werden sollen gedruckt werden können, wobei das Gerät folgendes aufweist:
- Bilddatenverarbeitungsmittel (11), die empfangene Bilddaten von einem Dokument, das reproduziert werden soll, empfangen und verarbeiten können,
- Druckmittel (15) mit deren Hilfe ein Blatt (31), das eine gegebene Blattlänge aufweist, mit den empfangenen Bilddaten von dem Dokument, das reproduziert werden soll, bedruckt werden kann, und
- Antriebsmittel (26) mittels derer jedesmal ein Blatt (31) angetrieben werden kann, während das Blatt (31) bedruckt wird,
**dadurch gekennzeichnet, daß**
das Gerät weiterhin folgendes aufweist:
- aktivierbare Verzögerungsmittel (18; 43), mittels derer während eines Übermittlungsprozesses von wenigstens zwei Dokumenten, die reproduziert werden sollen, nachdem solch ein Blatt (31) über eine Drucklänge über einem oberen Schwellenwert aber nicht über die gesamte Blattlänge, in Übereinstimmung mit den empfangenen Bilddaten von dem Dokument, das durch dieses Drucken reproduziert werden soll, bedruckt worden ist und vor einem nachfolgenden Empfang von Bilddaten von einem folgenden Dokument, das reproduziert werden soll, den nachfolgenden Empfang von den Bilddaten von dem folgenden Dokument, das reproduziert werden soll, verzögert, falls das Auswerfen von dem Blatt (31), das bedruckt worden ist und das Zuführen von dem folgenden Dokument länger dauert als eine vorangehend gestartete Pause in Übereinstimmung mit einem Übermittlungsprotokoll.

2. Faxgerät (1) nach Anspruch 1,
**dadurch gekennzeichnet, daß**
es weiterhin folgendes aufweist:
- Detektionsmittel (42), die konstruiert sind, um die Bedingung zu detektieren, daß ein Blatt (31) mit der gegebenen Blattlänge mit den empfangenen Bilddaten von einem reproduzierten Dokument über eine Drucklänge oberhalb eines oberen Schwellenwertes aber nicht über die gesamte Blattlänge bedruckt worden ist, und mittels derer eine erste Detektionsinformation (PPI1) erzeugt werden kann, wenn diese Bedingung detektiert ist, und
- Unterscheidungsmittel (17), die konstruiert sind, um die Bedingung, daß Bilddaten von einem folgenden Dokument, das reproduziert werden soll, empfangen und gedruckt werden, zu unterscheiden und die es ermöglichen eine Unterscheidungsinformation (FDI) zu erzeugen, wenn diese Bedingung unterschieden worden ist, und
- Logikmittel (19), die mit den Detektionsmitteln (42) und den Unterscheidungsmitteln (17) zusammenwirken, und die eine Aktivierungsinformation (ACI) erzeugen können, wenn die erste Detektionsinformation (PPI1) und die Unterscheidungsinformation (FDI) verfügbar sind, und die Verzögerungsmittel (18; 43) in dem Faxgerät (1) mittels der Aktivierungsinformation (ACI) aktivierbar sind.

3. Faxgerät (1) nach Anspruch 2,
**dadurch gekennzeichnet, daß**
- die Detektionsmittel (42) konstruiert sind, um die Bedingung zu detektieren, daß ein Blatt (31) mit der gegebenen Blattlänge nur mit den empfangenen Bilddaten von einem reproduzierten Dokument über eine Drucklänge unter einem Schwellenwert bedruckt worden ist und
- die Detektionsmittel (42) eine zweite Detektionsinformation (PPI2) erzeugen können, wenn diese Bedingung detektiert worden ist, und
- die Logikmittel (19) angeordnet sind, um die Aktivierungsinformation (ACI) für die Aktivierung von den Verzögerungsmitteln (18; 43) nicht zu erzeugen, wenn die zweite Detektionsinformation (PPI2) und die Unterscheidungsinformation (FDI) verfügbar sind.

4. Faxgerät (1) nach Anspruch 1,
**dadurch gekennzeichnet, daß**
die aktivierbaren Verzögerungsmittel (18) Trainingsmodusabrufmittel aufweisen, um die durch das Übermittlungsprotokoll vorgegebene Pause zu verwenden, wobei der Trainingsmodus verlängert und der Empfang von den Bilddaten von dem folgenden Dokument verzögert wird.

5. Faxgerät (1) nach Anspruch 1,
**dadurch gekennzeichnet, daß**
die aktivierbaren Verzögerungsmittel (43) Druckzeilendauerankündigungsmittel aufweisen, die zur Verfügung gestellt werden, um ein Übermittlungsfaxgerät über eine Druckzeilendauer zu informieren, die länger als erforderlich ist und um folglich den Empfang von den Bilddaten von dem folgenden Dokument zu verzögern.

## Revendications

1. Télécopieur (1),
dans lequel des feuilles (31) ayant une longueur de feuille donnée peuvent être imprimées avec les données d'image reçues de documents à reproduire et comprenant :
des moyens de traitement de données d'image (11), qui peuvent recevoir et traiter des données d'image reçues de documents à reproduire,
des moyens d'impression (15), à l'aide desquels une feuille (31) ayant une longueur de feuille donnée peut être imprimée avec les données d'image reçues du document à reproduire, et
des moyens d'entraînement (26), par lesquels à chaque fois une feuille (31) peut être entraînée pendant que la feuille (31) est imprimée,
ledit télécopieur étant **caractérisé par le fait qu'**il comprend en outre
des moyens à retard activables (18 ; 43), par lesquels, durant une opération de transmission d'au moins deux documents à reproduire, après qu'une telle feuille (31) a été imprimée sur une longueur d'impression dépassant une valeur de seuil supérieur mais pas sur la longueur de feuille entière, conformément aux données d'image reçues du document à reproduire par cette impression et avant une réception subséquente de données d'image d'un document suivant à reproduire, la réception subséquente des données d'image du document suivant à reproduire est retardée dans le cas où l'éjection de la feuille (31) ayant été imprimée et l'introduction du document suivant prennent plus longtemps qu'une pause préalablement commencée conformément à un protocole de transmission.

2. Télécopieur (1) selon la revendication 1, **caractérisé en ce qu'**il comprend en outre des moyens de détection (42) qui sont construits pour détecter la situation où une feuille (31) ayant la longueur de feuille donnée a été imprimée avec les données d'image reçues d'un document reproduit sur une longueur d'impression dépassant une valeur de seuil supérieur mais pas sur la longueur de feuille entière, et par lesquels une première information de détection (PPI1) peut être générée lorsque cette situation est détectée, et
des moyens de discernement (17) qui sont construits pour discerner la situation où des données d'image d'un document suivant à reproduire doivent être reçues et imprimées, et qui permettent de générer une information de discernement (FDI) lorsque cette situation est discernée, et des moyens logiques (19) qui coopèrent avec les moyens de détection (42) et les moyens de discernement (17) et qui peuvent générer une information d'activation (ACI) lorsque la première information de détection (PPI1) et l'information de discernement (FDI) sont disponibles, les moyens à retard (18 ;43) dans le télécopieur (1) étant activables par l'information d'activation (ACI).

3. Télécopieur (1) selon la revendication 2, **caractérisé en ce que** les moyens de détection (42) sont construits pour détecter la situation où une feuille (31) ayant la longueur de feuille donnée a seulement été imprimée avec les données d'image reçues d'un document reproduit sur une longueur d'impression inférieure à une valeur de seuil inférieur, et
les moyens de détection (42) peuvent générer une deuxième information de détection (PPI2) lorsque cette situation est détectée, et
les moyens logiques (19) sont agencés pour ne pas générer l'information d'activation (ACI) pour l'activation des moyens à retard (18 ;43) lorsque la deuxième information de détection (PPI2) et l'information de discernement (FDI) sont disponibles.

4. Télécopieur (1) selon la revendication 1, **caractérisé en ce que** les moyens à retard activables (18) comprennent des moyens de demande de mode d'apprentissage pour utiliser la pause ordonnée par le protocole de transmission, en prolongeant de ce fait le mode d'apprentissage et en retardant la réception des données d'image du document suivant.

5. Télécopieur (1) selon la revendication 1, **caractérisé en ce que** les moyens à retard activables (43) comprennent des moyens d'annonce de durée de ligne d'impression prévus pour renseigner un télécopieur émetteur à propos d'une durée de ligne d'impression plus longue que requis et pour retarder en conséquence la réception des données d'image du document suivant.
